# EUROPEAN PATENT APPLICATION

(11) **EP 3 130 449 A1**
(43) Date of publication of application: **15.02.2017**
(21) Application number: 15776890.4
(22) Date of filing: 10.04.2015
(51) Int. Cl.: B29C 67/00, B23K 26/21, B23K 26/34

(54) **SHAPING DEVICE AND SHAPING METHOD**

(30) Priority: 11.04.2014 JP 2014081878
(71) Applicant: Seiko Epson Corporation, Tokyo 160-8801 (JP)
(72) Inventor: KOGA, Yoshiro, Suwa-shi Nagano 392-8502 (JP); MIYASHITA, Takeshi, Suwa-shi Nagano 392-8502 (JP); KAMAKURA, Tomoyuki, Suwa-shi Nagano 392-8502 (JP)
(74) Representative: Hoffmann Eitle
(86) International application number: PCT/JP2015/002040
(87) International publication number: WO 2015/156002

(57) **Abstract**

To provide a molding apparatus that has satisfactory thermal energy efficiency and can be reduced in size and a molding method.

A molding apparatus 1 includes a tape conveying mechanism 6 that conveys a molding material 10 having flexibility to a molding position on a stage 2, a laser radiating mechanism 7 that radiates a laser beam on the molding material 10 conveyed to the molding position, and a moving mechanism 4 that moves the molding position P relatively to the stage.

## Description

### Technical Field

The present invention relates to a molding apparatus and a molding method for laminating a molding material and molding a three-dimensional molded object.

### Background Art

There has been known a molding apparatus (a so-called 3D printer) that generates a three-dimensional molded object on the basis of input data (see, for example, PTL 1).

The apparatus described in PTL 1 includes a substrate and a dispensing head. The substrate and the dispensing head are provided to be capable of moving relatively to each other. A solid rod, which is a molding material, is supplied to the dispensing head. The solid rod is heated to a melting point in the dispensing head and dispensed from a nozzle of the dispensing head in a fluidized state.

### Citation List

### Patent Literature

PTL 1: JP-A-3-158228

### Summary of Invention

### Technical Problem

Incidentally, the apparatus described in PTL 1 melts the solid rod (the molding material) supplied into the dispensing head and dispenses the material in a melted state to a predetermined position to mold a three-dimensional molded object. In such a configuration, it is necessary to surely melt the molding material. There is a problem in that the configuration of a heating section is increased in size. Further, since a heat quantity necessary for the melting also increases, there is a problem in that energy efficiency is deteriorated. Since it is necessary to extrude the molding material in the melted state, there is also a problem in that a heating time for completely melting the molding material increases. If the melted molding material remains in the nozzle, maintenance such as cleaning is complicated.

An object of the present invention is to provide a molding apparatus that has satisfactory thermal energy efficiency and can be reduced in size and a molding method.

### Solution to Problem

A molding apparatus of the present invention includes: a feeding mechanism that conveys a molding material having flexibility to a molding position on a stage; a laser radiating mechanism that radiates a laser beam on the molding material conveyed to the molding position and melts the molding material; and a moving mechanism that moves the molding position relatively to the stage.

In the present invention, the molding material is conveyed to the molding position on the stage. The laser beam emitted from the laser radiating mechanism is radiated on, for example, the distal end portion of the conveyed molding material to melt the distal end portion. Consequently, it is possible to melt only a necessary portion of the molding material. It is possible to laminate the melted molding material in the molding position. The molding position with respect to the stage is moved by the moving mechanism, a laminating position of the molding material is sequentially changed, and the molding processing is repeated. Consequently, it is possible to mold a molded object having a desired shape. Note that the molding position on the stage in the present invention includes, in addition to a predetermined position of the stage serving as the molding position, a predetermined position in the molded object molded on the stage serving as the molding position.

In the present invention explained above, the laser beam only has to be locally radiated on the molding position at, for example, the distal end portion of the molding material. It is unnecessary to melt the entire molding material. Therefore, for example, compared with the configuration for extruding the molding material in the melted state, necessary thermal energy is small, time for heating gas can be reduced, and energy efficiency is high. Therefore, a large heating mechanism for melting the molding material is unnecessary. It is possible to achieve a reduction in the size of the apparatus. Further, the melted molding material does not remain in the molding apparatus. Therefore, cleaning or the like for removing the residual material is unnecessary and maintenance is facilitated.

In the molding apparatus of the present invention, it is preferable that the molding material is a tape-like material having a rectangular shape in section.

In the present invention, the tape-like molding material is used. In a molding material having a circular shape in section or an elliptical shape in section, a thickness dimension is different depending on a position. The thickness of the molding material laminated in a molding position fluctuates. On the other hand, in the tape-like material having the rectangular shape in section, since the thickness dimension is uniform, a thickness dimension of the tape-like material laminated in the molding position is also uniform. It is possible to mold a highly precise molded object.

The sequentially fed molding material is usually wound on a cylindrical winding core (bobbin) and stored. However, when the molding material having the circular shape in section or the elliptical shape in section is wound on the bobbin, as explained above, the thickness dimension in section of the molding material having the circular shape in section or the elliptical shape in section is different depending on a position. Therefore, a gap is formed even when the molding material is wound on the bobbin such that windings of the molding material are adjacent to one another. On the other hand, when the tape-like molding material is wound on the bobbin, it is possible to wind the molding material on the bobbin with a tape front surface and a tape rear surface closely attached to each other. Therefore, it is possible to improve a volume occupancy ratio compared with when the molding material having the circular shape in section or the elliptical shape in section is used. That is, compared with when the molding material having the circular shape in section or the elliptical shape in section is used, it is possible to reduce a winding and storing space of the molding material and it is possible to achieve a further reduction in the size of the apparatus.

In the molding material of the present invention, it is preferable that an aspect ratio of a tape thickness dimension and a tape width dimension in sectional view of the molding material is equal to or larger than 10.

In the present invention, the aspect ratio (the tape width dimension/the tape thickness dimension) is equal to or larger than 10. When the aspect ratio is smaller than 10, it is conceivable that the tape thickness dimension is too large with respect to the tape width dimension or the tape width dimension is too small with respect to the tape thickness dimension. In the former case, the flexibility of the molding material is insufficient and conveyance handleability of the molding material by a feeding mechanism is deteriorated. In the latter, a twist or the like occurs and the conveyance handleability is deteriorated. On the other hand, by setting the aspect ratio to be equal to or larger than 10 as explained above, it is possible to improve conveyance efficiency of the molding material having the flexibility. It is possible to efficiently convey the molding material to a desired molding position.

In the molding apparatus of the present invention, it is preferable that the laser radiating mechanism includes a scanning section that moves a radiation spot of the laser beam along a tape width direction of the molding material.

In the present invention, the laser beam is locally radiated on a part in the width direction of the tape-like molding material to melt only the radiated part (a radiation spot). In this case, by providing the scanning section in the laser radiating mechanism, it is possible to move the radiation spot in the width direction of the tape. Consequently, compared with, for example, a configuration for melting a part in the tape width direction and subsequently conveying the tape and melting a part in the tape width direction again, it is possible to laminate the entire molding material in the tape width direction in the molding position and it is possible to use the tape-like molding material without waste.

In the molding apparatus of the present invention, it is preferable that the laser radiating mechanism radiates the laser beam on the molding material under an inert gas atmosphere.

In the present invention, the molding material is heated and melted by the laser beam under the inert gas atmosphere. Therefore, the molding material is not degenerated by a chemical change or the like. It is possible to mold a high-quality molded object. For example, when a metal material is used as the molding material, it is conceivable that the molded object is degenerated by oxidation or the like due to heating by the laser beam. However, in the present invention, it is possible to prevent metal oxidation with an inert gas.

In the molding apparatus of the present invention, it is preferable that the laser radiating mechanism radiates the laser beam on the molding material under a dehumidified gas atmosphere.

In the present invention, the molding material is heated and melted under the dehumidified gas atmosphere. Therefore, it is possible to prevent an inconvenience that the molding material chemically reacts with water to be degenerated. It is possible to mold a high-quality molded object.

In the molding apparatus of the present invention, it is preferable that the laser radiating mechanism radiates the laser beam from a direction inclining with respect to the normal direction of the stage.

In the present invention, the laser beam is radiated from the direction inclining with respect to the normal direction of the stage. In such a configuration, the laser beam is less easily radiated in a region other than the molding position of the molding material. In particular, by radiating the laser beam from an upstream side toward a downstream side in a conveying direction of the molding material, it is possible to avoid an inconvenience that the laser beam is radiated further on the upstream side than the molding position.

It is possible to prevent a ghost caused by return of the laser beam regularly reflected in the molding position to the laser radiating mechanism. It is possible to mold a highly precise molded object.

In the molding apparatus of the present invention, it is preferable that the molding apparatus includes a light receiving section that receives the laser beam reflected by the molding material in the molding position.

In the present invention, the molding apparatus includes a light receiving section that receives the laser beam reflected in the molding position.

By receiving the laser beam with the light receiving section and detecting a light receiving position of the laser beam, it is possible to control the radiating position of the laser beam to a high degree. It is possible to determine from the intensity of the laser beam received by the light receiving section whether the laser beam having intensity and a wavelength necessary for melting the molding apparatus is output.

In the molding apparatus of the present invention, it is preferable that the laser radiating mechanism radiates the laser beam, a half-value width of a light intensity space distribution of which is equal to or larger than 50 µm and equal to or smaller than 200 µm.

In the present invention, the laser beam, the half-value width of the light intensity space distribution of which in the radiation spot is 50 µm to 200 µm, is radiated. When a laser beam, a half-value width of a light intensity space distribution of which is smaller than 50 µm with respect to the radiation spot, is radiated, in some case, the output of the laser beam is insufficient and it is difficult to melt the molding material. When a laser beam, a half-value width of a light intensity space distribution of which is larger than 200 µm with respect to the radiation spot, is radiated, it is likely that a region other than the radiation spot of the molding material is melted. On the other hand, by setting the half-value width of the light intensity space distribution with respect to the radiation spot to the condition explained above, it is possible to radiate the laser beam having an optimum output with respect to the radiation spot. It is possible to efficiently melt the molding material. Further, it is possible to suppress the melting of the molding material outside the radiation spot and mold a highly precise molded object.

In the molding apparatus of the present invention, it is preferable that the molding material is configured by metal.

In the present invention, since the metal material is used as the molding material, it is possible to mold a high-strength molded object.

In the molding apparatus of the present invention, it is preferable that the molding material is subjected to flameproof or fireproof treatment.

In the present invention, the metal molding material is subjected to the flameproof treatment or the fireproof treatment. Therefore, when the laser beam is radiated, the metal material less easily causes a chemical reaction due to combustion. It is possible to mold a high-quality molded object.

In the molding apparatus of the present invention, it is preferable that the molding material is configured by resin.

In the present invention, the resin material is used as the molding material. The resin material has a low melting point compared with the metal material. It is possible to reduce the output of the laser beam. It is possible to achieve power saving.

A molding method of the present invention includes: conveying a molding material having flexibility to a molding position on a stage; and radiating a laser beam on the molding material conveyed to the molding position to melt the molding material and laminate the molding material in the molding position and moving the molding position to change a laminating position of the molding material and mold a molded object.

In the present invention, as in the invention explained above, the molding material is conveyed to the molding position on the stage and the laser beam is radiated on, for example, the distal end portion of the conveyed molding material to melt the distal end portion and laminate the distal end portion in the molding position. By repeating this while moving the molding position, it is possible to mold a molded object having a desired shape. Since the laser beam is locally radiated on the molding position at, for example, the distal end portion of the molding material, it is unnecessary to melt the entire molding material. Therefore, for example, compared with the configuration for extruding the molding material in the melted state, necessary thermal energy is small. It is possible to achieve improvement of energy efficiency. Further, a large heating mechanism for melting the molding material is unnecessary. It is possible to achieve a reduction in the size of the apparatus.

### Brief Description of the Drawings

[Fig. 1] Fig. 1 is a diagram showing the schematic configuration of a molding apparatus in an embodiment.
[Fig. 2] Fig. 2 is a perspective view showing the schematic configuration of a molding material used in the embodiment.
[Fig. 3] Fig. 3 is a sectional view showing the schematic configuration of a cassette in the embodiment.
[Fig. 4] Fig. 4 is a diagram showing the schematic configuration of a laser radiating mechanism in the embodiment.
[Fig. 5] Fig. 5 is a diagram showing a light intensity space distribution of a laser beam emitted from the laser radiating mechanism.
[Fig. 6] Fig. 6 is a flowchart showing a molding method (molding processing) for molding a molded object using the molding apparatus in the embodiment.
[Fig. 7] Fig. 7 is a perspective view showing a process in which the molded object is formed by the molding processing in the embodiment.
[Fig. 8] Fig. 8 is a perspective view showing a storage configuration for a molding material in another embodiment.
[Fig. 9] Fig. 9 is a sectional view showing the configuration of a feeding roller at the time when a thread-like molding material is used in the other embodiment.

### Description of Embodiments

A molding apparatus in an embodiment according to the present invention is explained below with reference to the drawings.

### [Schematic configuration of the molding apparatus]

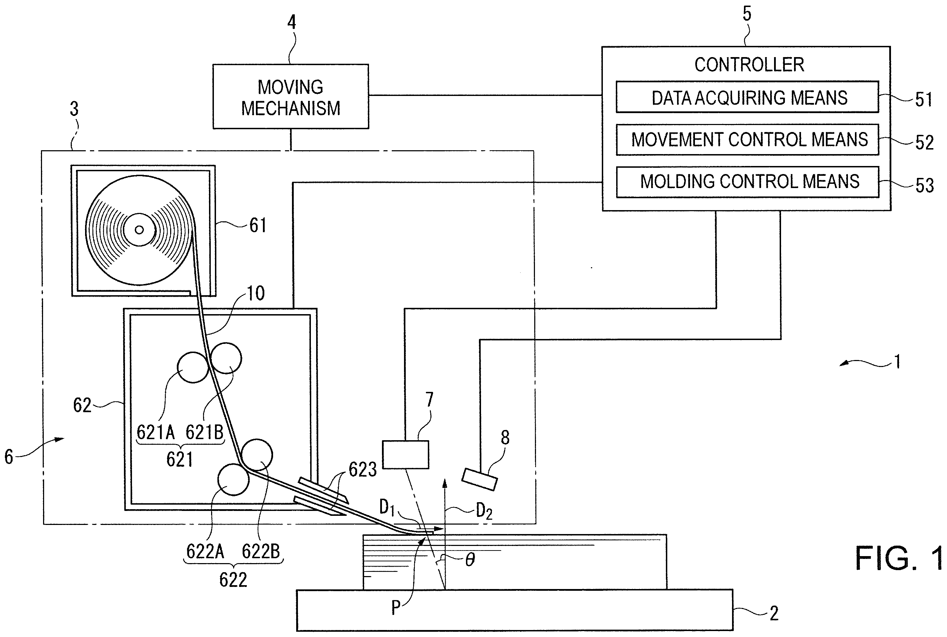

Fig. 1 is a diagram showing the schematic configuration of the molding apparatus in this embodiment.

As shown in Fig. 1, a molding apparatus 1 (a laminate molding apparatus) includes a stage 2, a molding head 3, a moving mechanism 4, and a controller 5.

The molding apparatus 1 is an apparatus that laminates a molding material on the stage 2 and molds a three-dimensional molded obj ect according to a sectional shape of data for molding input to the controller 5 from a data output apparatus such as a personal computer. Specifically, the controller 5 controls the moving mechanism 4 on the basis of the data for molding and moves the molding head 3 to a predetermined molding position P. The controller 5 controls the molding head 3 and melts and laminates a molding material 10 in the molding position P on the stage 2.

Note that, although not shown in the figure, in this embodiment, the stage 2, the molding head 3, and the moving mechanism 4 are provided in a closed molding chamber such as a plenum chamber. An inert gas is filled in the molding chamber.

The components are explained in detail below.

### [Configuration of the stage 2]

The stage 2 is a pedestal for molding a molded object and includes, for example, a plane on which the molded object is placed.

### [Configuration of the molding head 3]

The molding head 3 is provided to be capable of being moved with respect to the stage 2 by the moving mechanism 4. The molding head 3 includes, as shown in Fig. 1, a tape conveying mechanism 6, a laser radiating mechanism 7, and a detector 8 (a light receiving section).

### [Configuration of the tape conveying mechanism 6]

The tape conveying mechanism 6 configures the feeding mechanism of the present invention and conveys the molding material 10 to the molding position P on the stage 2. The tape conveying mechanism 6 includes a cassette 61 that stores the molding material 10 and a feeding section 62 that conveys the molding material 10, which is supplied from the cassette 61, to the predetermined molding position P on the stage 2.

### (Configuration of the molding material 10)

The molding material 10 stored in the cassette 61 is explained.

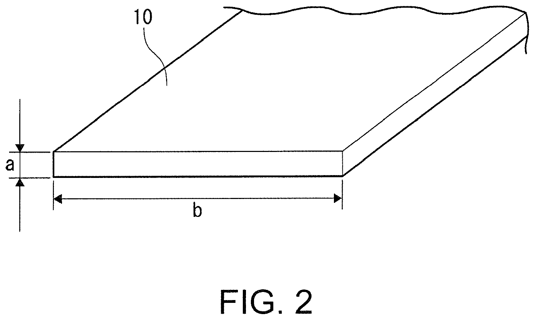

Fig. 2 is a perspective view showing the schematic configuration of the molding material 10 used in this embodiment.

As shown in Fig. 2, the molding material 10 includes a flat cross section having a short side (a tape thickness dimension) "a" and a long side (a tape width dimension) "b". The molding material 10 is configured in a thin shape (a tape shape) having an aspect ratio (b/a) equal to or larger than 10. When the aspect ratio is smaller than 10, conveyance handleability of the molding material 10 is deteriorated. That is, when the tape thickness dimension "a" is increased with respect to the tape width dimension "b", flexibility of the molding material 10 is deteriorated, whereby conveyance efficiency in a feeding roller pair 621 and a driving roller pair 622 explained below is deteriorated and handleability (easiness of conveyance) is deteriorated during conveyance. In this embodiment, a surface (a tape rear surface) on the stage 2 side of the molding material 10 and the upper surface of molded object in the molding position P (or the surface of the stage 2) are brought into contact with each other making use of the flexibility of the molding material 10. Therefore, when the molding material 10 does not have sufficient flexibility, in the molding position P, a gap is formed between the upper surface of the molded object (or the surface of the stage 2) and the tape rear surface of the molding material 10. Adhesion at the time when the molding material 10 is melted and laminated is deteriorated. Even when the tape thickness dimension "a" is sufficiently small, if the tape width dimension "b" is small, it is likely that a twist occurs in the molding material 10 during conveyance. Conveyance handleability is deteriorated.

On the other hand, by setting the aspect ratio to be equal to or larger than 10 as explained above, it is possible to improve conveyance efficiency of the molding material 10 having flexibility. It is possible to efficiently convey the molding material to a desired molding position.

As such a molding material 10, metal, resin, and the like can be illustrated.

When metal is used as the molding material 10, the strength of a molded object obtained by molding is higher than the strength of a molded object molded from resin. On the other hand, the molding material 10 needs to be conveyed to the molding position P on the stage 2. Flexibility of the molding material 10 is required. In the molding material 10 made of metal, it is desirable to set the tape thickness dimension to a≤0.1mm in order to secure the flexibility. When the tape thickness dimension is a>0.1mm, the molding material 10 less easily bends. It is difficult to convey the molding material 10 to the desired molding position P during conveyance.

The tape width dimension "b" is set taking into account the conveyance handleability as explained above. When the tape thickness dimension "a" is 0.1 mm, the tape width dimension is desirably set to be equal to or larger than 1 mm. Note that, depending on a set value of the tape thickness dimension "a" , a set value of the tape width dimension "b" is more desirably set to 5mm≤b≤15mm. In the tape-like molding material 10 formed in the dimensions "a" and "b" explained above, it is possible to maintain sufficient flexibility and it is possible to suppress deterioration in handleability due to a twist or the like.

When the molding material 10 made of metal is used, it is more desirable to use Mg. Mg has small specific gravity compared with, for example, Al (whereas Mg specific gravity is 1.7, Al specific gravity is 2.7). It is possible to achieve a reduction in the weight of the molding material 10.

Further, the molding material 10 made of metal is desirably applied with flameproof treatment or fireproof treatment to prevent oxidation from occurring when the molding material 10 is heated to near a melting point. As the flameproof treatment and the fireproof treatment, publicly-known techniques can be used.

It is possible to manufacture the molding material 10 made of metal explained above in a large volume and inexpensively by cutting a material molded by rolling or extrusion.

On the other hand, when resin is used as the molding material 10, a melting point is low compared with metal. It is possible to set the output of a laser beam in the laser radiating mechanism 7 low. It is possible to achieve further simplification of the heating mechanism. When such a molding material 10 made of resin is used, it is desirable to set the tape thickness dimension to a≤1mm and set the tape width dimension to 5mm≤b. In the molding material 10 made of resin, flexibility is easily secured and a thickness dimension can be increased compared with metal. However, when the tape thickness dimension is a>1mm, flexibility is insufficient and handleability is deteriorated. When the tape width dimension is 5mm>b, a twist easily occurs and handleability is deteriorated. Consequently, it is desirable to configure the molding material 10 such that the aspect ratio is equal to or larger than 10 in the ranges of the dimensions "a" and "b" explained above.

### (Configuration of the cassette 61)

The cassette 61 of the tape conveying mechanism 6 is specifically explained.

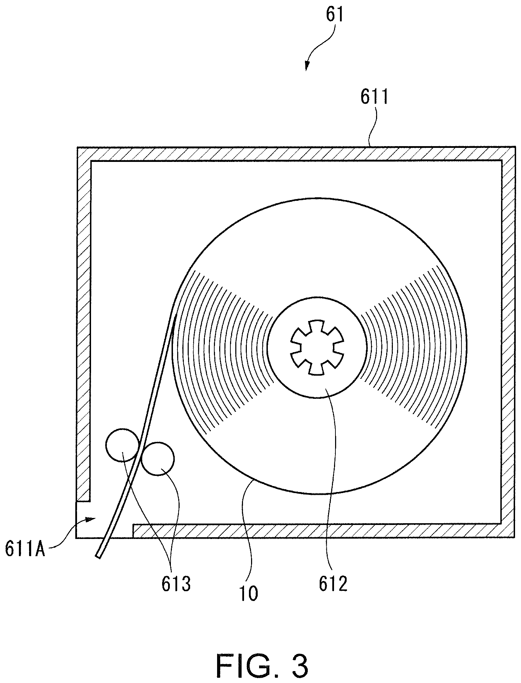

Fig. 3 is a sectional view showing the schematic configuration of the cassette 61 in this embodiment.

As shown in Fig. 3, the cassette 61 includes a case 611, a bobbin 612, and pinch rollers 613.

The case 611 has, for example, a rectangular parallelepiped shape including an internal space. The bobbin 612, the molding material 10 wound on the bobbin 612, and the pinch rollers 613 are housed on the inside of the case 611.

A feeding port 611A is provided in a part (in this embodiment, a corner of a rectangular parallelepiped) of the case 611. The molding material 10 stored on the inside is taken out to the outside from the feeding port 611A.

The bobbin 612 is a shaft-like member and is rotatably supported by surfaces opposed to each other in the case 611. One end portion of the molding material 10 explained above is fixed to the bobbin 612. The molding material 10 is wound along the circumferential surface of the bobbin 612. More specifically, the tape-like molding material 10 is wound in a concentric shape and stored in a roll shape such that a tape rear surface (a surface opposed to the stage 2 when the molding material 10 is conveyed onto the stage 2) adheres to a tape front surface (a surface on the opposite side of the tape rear surface) of the molding material 10 wound on the bobbin 612.

In such a configuration, a volume occupancy ratio is high compared with, for example, when a molding material having a circular shape in section is wound on the bobbin 612. Therefore, when the molding material having the circular shape in section and the tape-like molding material 10 in this embodiment are wound on the bobbin by the same amount, it is possible to reduce a volume when the molding material 10 in this embodiment is used compared with when the molding material having the circular shape in section is used. It is possible to achieve a reduction in the size of the cassette 61. Further, since the number of windings on the bobbin 612 is smaller as well, manufacturing efficiency is also satisfactory. When a size of the cassette 61 is specified, since a volume occupancy ratio is large when the tape-like molding material 10 in this embodiment is used, it is possible to store a larger amount of the molding material 10 in the cassette 61 compared with when the molding material having the circular shape in section is used.

The pinch rollers 613 are provided in the vicinity of the feeding port 611A and guide a conveying direction of the molding material 10. A pair of pinch rollers 613 is provided. The molding material 10 is pinched and guided to the feeding port 611A by the pair of pinch rollers 613. Since the molding material 10 is pinched by the pinch rollers 613, it is possible to suppress slack of the wound molding material 10. Traveling performance (conveying performance) of the molding material 10 fed from the feeding port 611A is improved.

In the cassette 61, for example, positioning sections by locking pins, guide protrusions, and the like not shown in the figure are provided on an exterior section of the case 611. By positioning the positioning sections in predetermined positions in the molding head 3, it is possible to mount the cassette 61 on the molding head 3.

### (Configuration of the feeding section 62)

As shown in Fig. 1, the feeding section 62 feeds the molding material 10, which is provided from the cassette 61, to the molding position P on the stage 2.

The feeding section 62 includes a feeding roller pair 621 configured by a pair of feeding rollers 621A and 621B, a driving roller pair 622 configured by a driving roller 622A and a driven roller 622B, and a guide section 623. Note that, in this embodiment, an example is explained in which one feeding roller pair 621 is provided. However, two or more feeding roller pairs 621 may be provided. A configuration may be adopted in which the feeding roller pair 621 is not provided and only the driving roller pair 622 is provided. Further, an example is explained in which only one driving roller pair 622 is provided. However, a configuration may be adopted in which two or more driving roller pairs 622 are provided.

The feeding roller pair 621 pinches the molding material 10 with the feeding rollers 621A and 621B and guides conveyance of the molding material 10. The feeding roller pair 621 conveys the molding material 10 while curving the molding material 10 to the opposite side of a winding curl (a winding direction on the bobbin 612) of the molding material 10 fed from the cassette 61. Consequently, it is possible to correct the winding curl of the molding material 10.

The driving roller pair 622 draws in the molding material 10 and feeds the molding material 10 toward the molding position P. Specifically, the driving roller pair 622 includes the driving roller 622A driven to rotate by a driving force of a motor or the like and the driven roller 622B (to which the motor driving force is not transmitted) that follows the driving of the driving roller 622A. Conveyance at constant speed of the molding material 10 is enabled by the driving roller 622A and the driven roller 622B.

The driving roller 622A is desirably in contact with the tape rear surface of the molding material 10. Consequently, the molding material 10 is urged to the driving roller 622A by the winding curl of the molding material 10. It is possible to suppress a slip or the like during conveyance. It is possible to improve conveyance efficiency.

Note that a configuration may be adopted in which the driving roller 622A is in contact with the tape front surface. A configuration may be adopted in which both of the pair of rollers configuring the driving roller pair 622 is driven as driving rollers. In this case, rotating speed of the driving roller in contact with the tape rear surface is slightly increased with respect to rotating speed of the driving roller in contact with the tape front surface. Consequently, it is possible to more surely correct the winding curl of the molding material 10.

The guide section 623 is configured in, for example, a leaf spring shape from a metal material having high durability, the surface of which is subjected to wear resistant treatment. The guide section 623 includes guide walls (not shown in the figure) at both ends along the conveying direction.

The guide section 623 removes the slack of the molding material 10, corrects the conveying direction of the molding material 10, and guides the conveyance to the molding position P on the stage 2.

In the molding material 10 guided by the guide section 623 , the distal end portion is urged to and brought into contact with the molding position P by a bend. A portion heated by the laser radiating mechanism 7 explained below is melted and laminated on the molding position P. That is, the molding material 10 in this embodiment is not pressed against the stage 2 or the molding material on the stage 2 with strong stress. Only the distal end portion of the molding material 10 comes into contact with the stage or the molding material on the stage 2 by a bend. Consequently, the molding material 10 is conveyed to the molding position P.

### [Configuration of the laser radiating mechanism 7]

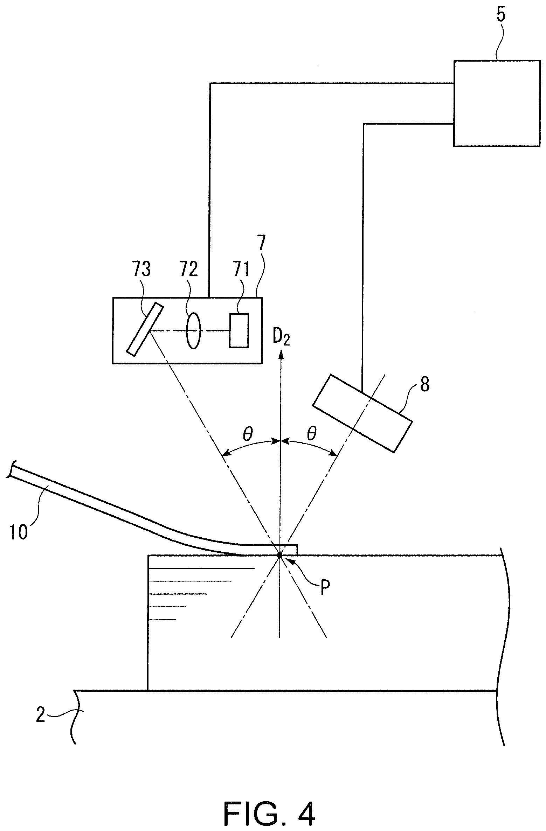

Fig. 4 is a diagram showing the schematic configuration of the laser radiating mechanism 7.

The laser radiating mechanism 7 includes, as shown in Fig. 4, a laser beam source 71, a beam-shaping optical system 72, and a scan mirror 73.

The laser beam source 71 is driven by control by the controller 5 and outputs a laser beam. As the laser beam source 71, a gas laser, a fiber laser, a semiconductor laser, and the like can be used. When the laser beam is radiated on the molding material 10 made of metal, a YAG laser, an excimer laser, and the like having a high absorption ratio to the metal can be used. As a wavelength of the laser beam to be radiated, an optimum wavelength having a high absorption ratio to the molding material 10 is set.

A beam shape of the laser beam emitted from the laser beam source 71 is shaped by the beam-shaping optical system 72. The shaped laser beam is scanned by the scan mirror 73 and radiated on a radiation spot on the molding position P of the molding material 10.

As the scan mirror 73 , for example, a galvanometer mirror and a polygon mirror can be used. The scan mirror 73 can scan the radiation spot of the laser beam along the tape width direction of the molding material 10. That is, the scan mirror 73 configures the scanning section of the present invention.

Note that an optical system such as an fθ lens may be disposed in the post stage of the scan mirror.

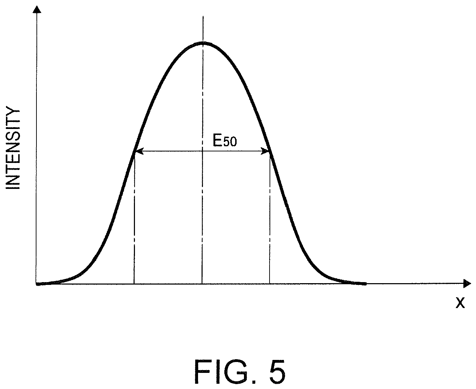

Fig. 5 is a diagram showing a light intensity space distribution of the laser beam radiated from the laser radiating mechanism 7.

The laser beam emitted from the laser radiating mechanism 7 has a light intensity space distribution substantially conforming to a Gaussian distribution shown in Fig. 5. In this embodiment, the output of the laser beam is set such that the laser beam in the radiation spot radiated on the molding material 10 is a laser beam having a light intensity space distribution within a half-value width E₅₀. Note that the half-value width E₅₀ is desirably set to be 50 µm to 200 µm. When the half-value width is smaller than 50 µm, a range in which a high-output laser beam is radiated on a desired radiation spot is narrow and a heat quantity is sometimes insufficient. On the other hand, when the half-value width is larger than 200 µm, it is likely that the molding material 10 is melted to a region other than the desired radiation spot. On the other hand, by setting the half-value width explained above, it is possible to suitably radiate a laser beam having a high absorption ratio to the molding material 10 on the radiation spot. It is possible to realize molding of a highly precise molded object.

The laser radiating mechanism 7 is disposed to incline at a predetermined angle θ with respect to a normal direction D₂ of the stage 2 such that the emitted laser beam travels from the upstream side to the downstream side in the conveying direction of the molding material 10. The inclination angle θ is suitably, for example, 0°<θ≤20° and desirably 10°≤θ≤20°. When the inclination angle θ is equal to or larger than 20°, a disposition space of the laser radiating mechanism 7 is large. The apparatus is increased in size.

In the configuration explained above, it is possible to avoid an inconvenience that a laser is regularly reflected on the surface of the molding material 10, reflected light returns to the laser radiating mechanism 7, an image is blurred as a so-called ghost, and an image is formed in a region other than a desired radiation spot. By radiating the laser beam from the upstream side to the downstream side in the conveying direction, it is possible to prevent radiation of the laser beam to the upstream side of the molding material 10. It is also possible to prevent an inconvenience that the region other than the radiation spot of the molding position P is melted.

### [Configuration of the detector 8]

The detector 8 receives a laser beam reflected in the molding position P and outputs a signal corresponding to a received light amount of the laser beam to the controller 5.

A position where the detector 8 is provided is desirably a position symmetrical to the laser radiating mechanism 7 with respect to the normal (D₂) of the stage 2. That is, as shown in Fig. 4, the detector 8 is provided in a position inclining at the angle θ with respect to the normal direction D₂ on the downstream side in the conveying direction.

### [Configuration of the moving mechanism 4]

The moving mechanism 4 moves the molding head 3 in axial directions of an X axis, a Y axis, and a Z axis with respect to the stage 2 and moves a conveyance destination (the molding position P) of the molding material 10 of the tape conveying mechanism 6 in the molding head 3 and a radiation spot of a laser beam of the laser radiating mechanism 7 to desired positions. That is, the moving mechanism 4 moves the molding position P with respect to the stage.

As a specific configuration, for example, a configuration can be illustrated in which the moving mechanism 4 includes a column capable of moving on a Y guide laid along the Y-axis direction, a slider including an X guide provided on the column and extending in the X-axis direction, and a column capable of moving along the X guide and including a Z guide extending along the Z direction and the molding head 3 is provided to be capable of moving along the Z guide of the column. A configuration may be adopted in which a plurality of arm members are coupled and a coupling angle of arms is controlled to make it possible to move the molding head 3 in a three-dimensional space.

In this embodiment, a configuration is illustrated in which the molding head 3 is moved with respect to the stage 2 by the moving mechanism 4. However, the present invention is not limited to this. For example, a configuration may be adopted in which the stage 2 is moved with respect to the molding head 3. Further, for example, a configuration may be adopted in which the stage 2 is moved along the Z direction and the molding head 3 is moved along the X and Y axes.

### [Configuration of the controller 5]

The controller 5 is configured by a storing section such as a memory, an arithmetic circuit such as a CPU, and the like. The controller 5 controls the entire operation of the molding apparatus 1. In the storage circuit, various programs and various data for controlling the molding apparatus 1 are recorded. The arithmetic circuit of the controller 5 reads and executes the programs stored in the storing section to function as data acquiring means 51, movement control means 52, and molding control means 53 as shown in Fig. 1. Note that, in this embodiment, an example is explained in which the functional components are realized by cooperation of an arithmetic circuit, which is hardware, and programs (software). However, for example, a configuration may be adopted in which the functional components are realized by combining integrated circuits (hardware) having the functions.

The data acquiring means 51 acquires data for molding from an external apparatus such as a personal computer communicably connected to the controller 5. Note that, for example, a configuration may be adopted in which the controller 5 includes a drive device that reads a recording medium and the controller 5 directly acquires data for molding from the recording medium mounted on the drive device.

The movement control means 52 controls the moving mechanism 4 on the basis of the data for molding to move the molding head 3.

The molding control means 53 controls the molding head 3. Specifically, the molding control means 53 controls the operations of the driving roller pair 622 of the feeding section 62, the laser radiating mechanism 7, and the detector 8, melts and laminates the molding material 10 in the molding position P, and molds a molded object.

### [Manufacturing method for a molded object by the molding apparatus 1]

A molding method for molding a molded object using the molding apparatus 1 explained above is explained below with reference to the drawings.

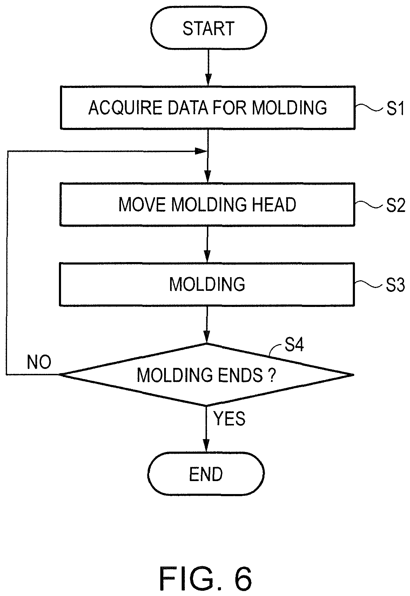

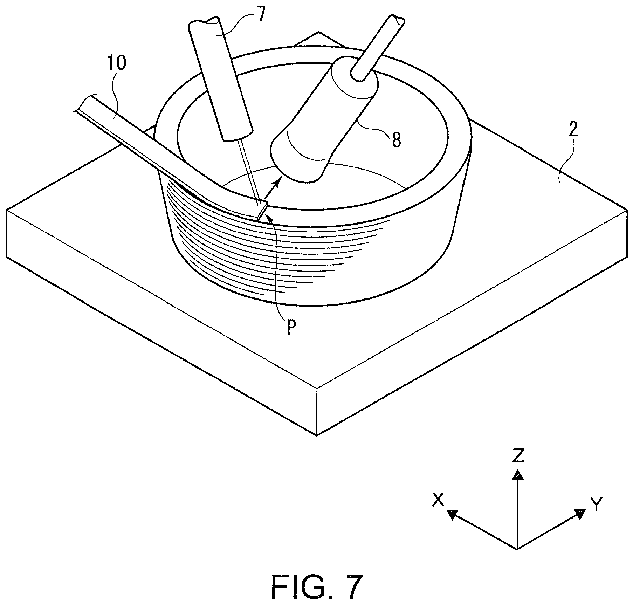

Fig. 6 is a flowchart showing the molding method (molding processing) for molding a molded object using the molding apparatus 1 in this embodiment. Fig. 7 is a perspective view showing a process in which a molded object is formed by the molding processing.

To mold a molded object with the molding apparatus 1, first, the data acquiring means 51 of the controller 5 acquires data for molding (step S1). Specifically, the data acquiring means 51 acquires, on the basis of operation by an operator, for example, data for molding input from an external apparatus such as a personal computer connected to the controller 5, data for molding recorded in a recording medium such as a CD-ROM, and data for molding acquired via a communication line such as the Internet.

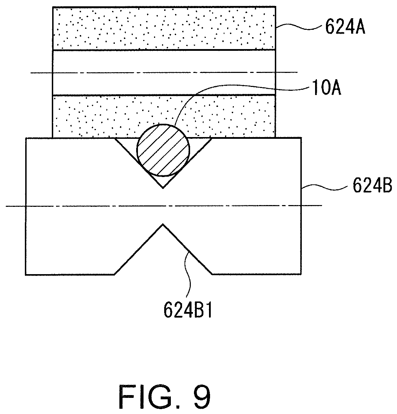

Subsequently, the movement control means 52 analyzes a sectional shape of the molded object from the data for molding. As shown in Fig. 9, the movement control means 52 moves the molding head 3 to the molding position P equivalent to a molded object cross section (step S2).

Specifically, the movement control means 52 controls the moving mechanism 4 to set the position of the molding head 3 and controls the scan mirror 73 of the laser radiating mechanism 7 to set a radiation spot in the tape width direction of the molding material 10 such that the distal end portion of the molding material 10 conveyed by the tape conveying mechanism 6 is located in the molding position P indicated on the basis of the data for molding.

Thereafter, the molding control means 53 controls the molding head 3 and the like to melt and laminate the molding material 10 in the molding position P and forms the molded object as shown in Fig. 7 (step S3).

Specifically, the molding control means 53 controls the laser beam source 71 to emit a laser beam having predetermined intensity. In this case, the controller 5 refers to a signal corresponding to a received light amount input from the detector 8 and adjusts the intensity of the laser beam, that is, carries out feedback control.

Consequently, the laser beam emitted from the laser radiating mechanism 7 is radiated on a part (a radiation spot) in the tape width direction at the distal end portion of the molding material 10. The molding material 10 is melted by the energy of the laser beam and laminated in the molding position P.

Thereafter, the molding control means 53 determines whether the molding processing for the molded object based on the data for molding is completed (step S4).

If it is determined "No" in step S4, the processing returns to step S2 and step S3. The movement of the molding head 3 and the melting and lamination of the molding material are repeated.

In this case, the movement control means 52 controls the scan mirror 73 to move the position of the radiation spot along the tape width direction and move the moving mechanism 4 and controls the position of the molding head 3 such that the radiation spot becomes the molding position P based on the data for molding. The radiation spot of the laser beam can be controlled by, for example, detecting the position of laser reflected light received in the light receiving section.

When the molding material 10 along the tape width direction is melted and laminated, the molding control means 53 drives the driving roller 622A of the feeding section 62 to feed the molding material 10 by a predetermined amount and moves the distal end portion to the molding position P. The molding material 10 fed by the feeding section 62 bends with own weight because the molding material 10 has flexibility. The molding material 10 is urged to and brought into contact with the molding position P. Thereafter, as in step S3, the molding material 10 is melted and laminated in the molding position P.

If it is determined "Yes" in step S4, the molding control means 53 ends the molding processing.

### [Action and effect of this embodiment]

The molding apparatus 1 in this embodiment includes the stage 2 on which a molded object is molded, the tape conveying mechanism 6 that conveys the molding material 10 having flexibility to the predetermined molding position P on the stage 2, the laser radiating mechanism 7 that radiates a laser beam on the molding material 10 conveyed to the molding position P and melts the molding material 10 within the radiation spot, and the moving mechanism 4 that moves the molding head 3, in which the laser radiating mechanism 7 is incorporated, such that the molding position P is located in a desired position based on data for molding.

In such a configuration, the conveyance and the supply of the molding material 10 and the melting of the molding material 10 by the laser beam are carried out by separate mechanisms. It is possible to locally melt only a necessary part of the molding material 10 with the laser beam. Therefore, for example, compared with when the melted molding material 10 is extruded and laminated in the molding position P, a melting amount and a melting area (volume) of the molding material 10 may be small and thermal energy may also be small. Therefore, it is possible to reduce the size of the configuration of the heating mechanism. It is possible to achieve a reduction in the size and a reduction in manufacturing costs of the molding apparatus 1.

The molding material 10 conveyed by the tape conveying mechanism 6 is urged to and brought into contact with the molding position P and melted in the position. Therefore, the melted molding material 10 does not adhere to or remain in the tape conveying mechanism 6 and the laser radiating mechanism 7. Therefore, maintenance of the molding apparatus 1 is also easy.

In this embodiment, the molding material 10 is formed in the tape shape having the rectangular shape in section. Such a tape-like molding material 10 has a uniform thickness dimension. Therefore, the thickness of the molding material 10 laminated in the molding position P does not fluctuate. It is possible to mold a highly precise molded object.

When the bobbin 612 winds the molding material 10 in the concentric shape, by attaching the tape rear surface and the tape front surface in close contact with each other, it is possible to eliminate a gap. For example, a volume occupancy ratio is high compared with when a molding material having a circular shape in section is used. That is, when the same amount of the molding material is stored in the cassette 61, compared with the molding material having the circular shape in section, it is possible to achieve a reduction in the size of the cassette 61. When a size of the cassette 61 is fixed, compared with when the molding material having the circular shape in section is used, it is possible to wind a larger amount of the molding material 10 on the bobbin.

There is also a configuration in which powder is used as a molding material. However, such powder has a spherical shape. Therefore, like the thread-like molding material, a volume occupancy ratio at the time when the powder is stored in the cassette 61 is small. Further, it is necessary to provide a lid section or the like that closes the feeding port 611A of the cassette. On the other hand, in the molding material 10 in this embodiment, it is possible to set the volume occupancy ratio larger than the volume occupancy ratio of the molding material of the powder, it is unnecessary to provide a lid section in the feeding port 611A, and it is easy to handle the molding material 10.

In this embodiment, the aspect ratio (a/b), which is the ratio of the tape thickness dimension "a" and the tape width dimension "b", of the tape-like molding material 10 is equal to or larger than 10. Therefore, it is possible to sufficiently secure the flexibility of the molding material 10. It is possible to suppress deterioration in conveyance handleability of the molding material 10 due to a twist, a bend, or the like.

As the molding material 10 in this embodiment, it is possible to select a molding material made of metal or made of resin.

When the molding material 10 made of metal is used, it is possible to mold a molded object having high-durability quality compared with the molding material 10 made of resin. When the molding material 10 made of resin is used, compared with the molding material 10 made of metal, a heating temperature is low and it is possible to reduce the output of the laser beam.

When the molding material 10 made of metal is used, it is possible to achieve a reduction in the weight of the molding material 10 by using Mg having small specific gravity. A molded object to be molded is also light in weight. When such metal is used, in order to suppress oxidation reaction by heating, flameproof treatment or fireproof treatment is applied to the metal. Consequently, it is possible to effectively suppress metal oxidation at the time when the laser beam is radiated on the metal. It is possible to prevent quality deterioration of the molded object due to degeneration.

In this embodiment, the laser radiating mechanism 7 includes the scan mirror 73.

Therefore, by controlling the scan mirror 73 with the controller 5, it is possible to scan the radiation spot of the laser beam along the tape width direction of the molding material 10. Consequently, it is possible to use the tape-like molding material 10 without waste.

In this embodiment, the stage 2, the molding head 3, and the moving mechanism 4 are disposed in the molding chamber such as a plenum chamber maintained under the inert gas atmosphere. That is, the laser radiating mechanism 7 radiates the laser beam on the molding material 10 under the inert gas atmosphere.

Therefore, the molding material 10 is heated by the laser beam under the inert gas atmosphere. The molding material 10 is not degenerated by a chemical change or the like at the time of heating and melting. It is possible to mold a high-quality molded object.

In this embodiment, the laser radiating mechanism 7 is disposed to incline at the angle θ with respect to the normal direction D₂ of the stage 2. Therefore, the laser beam emitted from the laser radiating mechanism 7 is obliquely made incident on the molding material 10 conveyed to the molding position P. Even if the laser beam is regularly reflected in the molding material 10, the laser beam does not return to the laser radiating mechanism 7. It is possible to prevent an inconvenience that the laser beam is radiated in a part other than the molding position P (other than the radiation spot) of the molding material 10 because of a ghost or the like.

The laser radiating mechanism 7 radiates the laser beam from the upstream side toward the downstream side in a conveying direction D₁. Therefore, the laser beam is not radiated on the upstream side of the molding material 10. It is possible to avoid an inconvenience that the molding material 10 in an unintended position is melted.

In this embodiment, the laser beam reflected by the molding material 10 is received by the detector 8.

Therefore, by inputting a light reception signal of the light reception by the detector 8 to the controller 5, it is possible to set, with the controller 5, an output value of the laser beam to a desired value. It is possible to detect the position of the radiation spot according to the position of the laser beam received by the detector 8. For example, when the radiation spot is scanned along the tape width direction, it is possible to precisely move the radiation spot to a desired position.

In this embodiment, the laser radiating mechanism 7 radiates the laser beam, the half-value width of the light intensity space distribution radiated to the radiation spot of which is equal to or larger than 50 µm and equal to or smaller than 200 µm.

When the half-value width of the light intensity space distribution with respect to the radiation spot is smaller than 50 µm, it is likely that output insufficiency of the laser beam occurs. When the half-value width of the light intensity space distribution with respect to the radiation spot is larger than 200 µm, it is likely that even the molding material 10 outside the radiation spot is melted. On the other hand, by radiating the laser beam having an optimum output on the radiation spot according to the condition explained above, it is possible to efficiently melt the molding material 10. Melting of the molding material 10 other than the radiation spot is suppressed. It is possible to mold a highly precise molded object.

### [Other embodiments]

Note that the present invention is not limited to the embodiment explained above. Modifications, improvements, and the like within a range in which the object of the present invention can be achieved are included in the present invention.

In the embodiment, the configuration is illustrated in which the laser radiating mechanism 7 is inclined with respect to the normal direction D₂ of the stage 2 such that the laser beam is radiated from the upstream side toward the downstream side in the conveying direction. However, the present invention is not limited to this. For example, a configuration may be adopted in which the laser beam is radiated from one side toward the other side in the tape width direction. A configuration may be adopted in which the laser beam is radiated from the downstream side toward the upstream side in the conveying direction. It is also possible that the laser radiating mechanism 7 is disposed along the normal direction D₂ of the stage 2 and the laser beam is radiated along the normal direction D₂.

In the embodiment, the configuration is illustrated in which the radiation spot is scanned along the tape width direction using the scan mirror 73. However, the present invention is not limited to this. For example, when the radiation spot of the laser beam extends over the entire tape width (e. g. , when a line beam is radiated) or when a string-like molding material is used, the scan mirror 73 does not have to be provided.

In the embodiment, the radiation spot is scanned along the tape width direction by the scan mirror 73. However, the laser radiating mechanism 7 may be configured to be capable of independently moving in the molding head 3. For example, a configuration may be adopted in which the laser radiating mechanism 7 itself is moved in the tape width direction. A configuration may be adopted in which the laser radiating mechanism 7 may be swung.

Further, for example, a configuration may be adopted in which, for example, the molding head 3 includes, as the tape conveying mechanism 6, a width-direction moving mechanism that moves the feeding section 62 in the tape width direction. In this case as well, the molding material 10 can be moved in the tape width direction by the tape conveying mechanism 6. Therefore, a configuration may be adopted in which the scanning section (the scan mirror 73, etc.) is not provided in the laser radiating mechanism 7.

In the embodiment, the configuration example is explained in which the laser beam is received by the detector 8. However, the present invention is not limited to this. For example, a configuration may be adopted in which the detector 8 is not provided.

In the embodiment, the example is explained in which the laser beam reflected by the molding material 10 is received by the detector 8. However, for example, it is also possible that a part of the laser beam emitted from the laser radiating mechanism 7 is separated by a beam splitter or the like and the separated laser beam is received by the detector to measure the intensity of the separated laser beam.

In the embodiment, the configuration is illustrated in which the molding chamber is maintained under the inert gas atmosphere. However, the present invention is not limited to this. For example, the molding chamber may be maintained under a dehumidified atmosphere. In this case as well, the molding material 10 is not oxidized by water molecules. It is possible to mold a high-quality molded object.

Further, in the embodiment, the example is explained in which the stage 2, the molding head 3, and the moving mechanism 4 are provided in the molding chamber. However, the present invention is not limited to this. When a material not degenerated by heating and the like is used as the molding material 10, the molding chamber may be absent. A configuration may be adopted in which a gas jetting section that blows an inert gas (or dehumidified air) against the radiation spot of the laser beam is provided. In this case as well, it is possible to maintain the vicinity of the radiation spot of the laser beam under the inert gas atmosphere. It is possible to suppress degeneration of the molding material 10.

In the embodiment, the laser beam, the half-value width of the light intensity space distribution of which in the radiation spot is 50 µm to 200 µm, is radiated. However, the present invention is not limited to this. For example, if the laser beam has a sufficient light amount, the half-value width of the laser beam may be smaller than 50 µm or may be larger than 200 µm.

In the embodiment, the tape-like material having the rectangular shape in section, the aspect ratio of which is equal to or larger than 10, is illustrated as the molding material 10. However, the present invention is not limited to this. For example, a tape-like material, the aspect ratio of which is smaller than 10, may be used as long as, depending on, for example, the quality of the molding material 10, the molding material 10 has sufficient flexibility and conveyance handleability of the molding material 10 in the tape-conveying mechanism 6 is satisfactory.

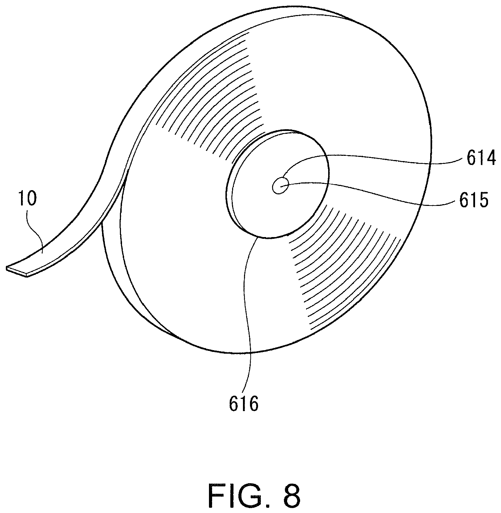

In the embodiment, the molding material 10 is configured to be stored in the cassette 61. However, the present invention is not limited to this. For example, as shown in Fig. 8, the molding material 10 may be retained in a roll shape by winding the molding material 10 on a shaft core 614. In this case, it is possible to mount the shaft core 614, on which the molding material 10 is wound, on the molding head 3 by providing a mounting hole 615 along the center axis of the shaft core 614 and inserting, for example, a locking pin provided in the molding head 3 through the mounting hole 615. It is possible to prevent slack or the like of the molding material 10 by adopting a configuration in which flange sections 616, which hold both end edges in the tape width direction of the molding material 10, are provided at both end portions in the axial direction of the shaft core 614.

In the embodiment, the example is explained in which the molding material 10 is the tape-like material. However, the molding material 10 may be configured in, for example, a thread shape. In this case as well, by winding the thread-like molding material in a concentric shape in a plurality of rows on the bobbin 612 of the cassette 61 shown in Fig. 3 or the shaft core 614 shown in Fig. 8, it is possible to hold the molding material. On the other hand, when such a thread-like molding material is used, a twist or the like during conveyance easily occurs. Conveyance handleability is sometimes deteriorated.

In this case, it is desirable to use rollers 624A and 624B having a sectional shape shown in Fig. 9 as the driving roller pair 622 of the feeding section 62. The driving roller 624A is a roller, the surface of which is configured by an elastic member having a coefficient of hole friction such as rubber or elastomer. The driven roller 624B is a roller in contact with a thread-like molding material 10A at two points. A groove 624B1 having a triangular shape in section, in which a half or more of the thread-like molding material 10A fits, is formed along the circumferential direction of the driven roller 624B. In such a configuration, it is possible to perform stable fixed amount conveyance by feeding the thread-like molding material 10A in the conveying direction while urging the thread-like molding material 10A with an elastic force against the groove 624B1.

In the embodiment, the example is explained in which the moving mechanism 4 moves the molding head 3 in the three-axis directions of ZYZ. However, the present invention is not limited to this. For example, as explained above, a configuration may be adopted in which the stage 2 is moved in the three-axis directions. A configuration may be adopted in which the stage 2 is moved in the Z-axis direction and the molding head is moved in the XY-axis directions. Further, as shown in Fig. 7, for example, when a molded object having a circular shape (cylindrical shape) in section is molded, a configuration may be adopted in which, for example, by providing a rotating mechanism in the stage 2, the molding head 3 is enabled to rotate and move relatively to the stage 2.

Besides, a specific structure in carrying out the present invention can be changed to other structures and the like as appropriate in a range in which the object of the present invention can be achieved.

### Reference Signs List

- 1: molding apparatus
- 2: stage
- 3: molding head
- 4: moving mechanism
- 5: controller
- 6: tape conveying mechanism (feeding mechanism)
- 7: laser radiating mechanism
- 8: detector (light receiving section)
- 10: molding material
- 10A: thread-like molding material
- 71: laser beam source
- 73: scan mirror (scanning section)

## Claims

1. A molding apparatus comprising:
a feeding mechanism that conveys a molding material having flexibility to a molding position on a stage;
a laser radiating mechanism that radiates a laser beam on the molding material conveyed to the molding position and melts the molding material; and
a moving mechanism that moves the molding position relatively to the stage.

2. The molding apparatus according to claim 1, wherein the molding material is a tape-like material having a rectangular shape in section.

3. The molding apparatus according to claim 2, wherein an aspect ratio of a tape thickness dimension and a tape width dimension in sectional view of the molding material is equal to or larger than 10.

4. The molding apparatus according to claim 2 or 3, wherein the laser radiating mechanism includes a scanning section that moves a radiation spot of the laser beam along a tape width direction of the molding material.

5. The molding apparatus according to any one of claims 1 to 4, wherein the laser radiating mechanism radiates the laser beam on the molding material under an inert gas atmosphere.

6. The molding apparatus according to any one of claims 1 to 5, wherein the laser radiating mechanism radiates the laser beam on the molding material under a dehumidified gas atmosphere.

7. The molding apparatus according to any one of claims 1 to 6, wherein the laser radiating mechanism radiates the laser beam from a direction inclining with respect to a normal direction of the stage.

8. The molding apparatus according to claim 7, further comprising a light receiving section that receives the laser beam reflected by the molding material in the molding position.

9. The molding apparatus according to any one of claims 1 to 8, wherein the laser radiating mechanism radiates the laser beam, a half-value width of a light intensity space distribution of which is equal to or larger than 50 µm and equal to or smaller than 200 µm.

10. The molding apparatus according to any one of claims 1 to 9, wherein the molding material is configured by metal.

11. The molding apparatus according to claim 10, wherein the molding material is subjected to flameproof or fireproof treatment.

12. The molding apparatus according to any one of claims 1 to 9, wherein the molding material is configured by resin.

13. A molding method comprising:
conveying a molding material having flexibility to a molding position on a stage; and
radiating a laser beam on the molding material conveyed to the molding position to melt the molding material and laminate the molding material in the molding position and moving the molding position to change a laminating position of the molding material and mold a molded object.
